(19) Europäisches Patentamt

European Patent Office

Office européen des brevets

(11) **EP 4 645 171 A1**

(12) **EUROPEAN PATENT APPLICATION**

(43) Date of publication:
**05.11.2025 Bulletin 2025/45**

(21) Application number: **25161246.1**

(22) Date of filing: **03.03.2025**

(51) International Patent Classification (IPC):
**G06N 5/01** *(2023.01)* **G06N 7/01** *(2023.01)*

(52) Cooperative Patent Classification (CPC):
**G06N 5/01;** G06N 7/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.04.2024 JP 2024073559**

(71) Applicant: **Fujitsu Limited
Kawasaki-shi, Kanagawa 211-8588 (JP)**

(72) Inventors:
• **YAMASAKI, Hironobu
Kawasaki-shi, 211-8588 (JP)**
• **TAMURA, Hirotaka
Yokohama-shi, 223-0066 (JP)**

(74) Representative: **Haseltine Lake Kempner LLP
Cheapside House
138 Cheapside
London EC2V 6BJ (GB)**

(54) **PROGRAM AND DATA PROCESSING APPARATUS**

(57) A program including instructions causing a computer to execute: searching for a solution to a combinatorial optimization problem through a local search (LS), in a first search range (SR) that is based on state variables (SVs); determining whether a current state (CS) represented by a combination of values of the SVs has fallen into a local solution in a search in the first SR; in a case where it is determined that the CS has fallen into the local solution, determining a first solution candidate (SC), based on SCs; and performing, in a state in which a value of a first SV that has a mutually equal value between the CS and the first SC among the SVs is fixed, the LS in a second SR that is based on a second SV that has mutually different values between the CS and the first SC among the SVs.

FIG. 1

## Description

FIELD

The embodiments discussed herein are related to a program and a data processing apparatus.

BACKGROUND

There is a method of converting, when searching for a solution to a combinatorial optimization problem, the combinatorial optimization problem into an Ising model representing a behavior of a spin of a magnetic substance. The Ising model is represented by an Ising-type evaluation function that evaluates a solution to the combinatorial optimization problem. The Ising-type evaluation function includes a plurality of state variables and a plurality of weight values. By a combination of values of the plurality of state variables, a state of the Ising model is represented. In the Ising-type evaluation function, the state variables are binary variables that take a value of 0 or 1 (or -1 or + 1). The state variables may be referred to as bits. The Ising-type evaluation function may also be referred to as an energy function, and the value of the evaluation function may also be referred to as energy of the Ising model.

A device that performs a solution search by using such an Ising-type evaluation function is called an Ising machine. For example, the Ising machine searches for a combination that minimizes the value of the evaluation function among combinations of the values of the state variables included in the evaluation function. In this case, the combination of the values of the state variables that minimizes the value of the evaluation function corresponds to a ground state or an optimal solution.

As a solution finding method for obtaining an approximate solution to a combinatorial optimization problem in a practical time, there is a local search. As examples of a method of performing the local search, there are a simulated annealing method which is a type of a Markov Chain Monte Carlo (MCMC) method, a replica exchange method (also called an exchange Monte Carlo method or the like), and the like.

Some optimization problems have a constraint (1-hot constraint) that the number of state variables having a value of 1 among a group of state variables included in an evaluation function is only one. In the related art, an optimization apparatus has been proposed which reduces a calculation time by performing a local search limitedly in a state satisfying the 1-hot constraint.

Japanese Laid-open Patent Publication No. 2003-223322, Japanese Laid-open Patent Publication No. 2018-109950, U.S. Patent Application Publication No. 2019/0251227, U.S. Patent Application Publication No. 2016/0203419, and Japanese Laid-open Patent Publication No. 2020-064536 are disclosed as related art.

SUMMARY

TECHNICAL PROBLEM

In a local search, a state represented by a combination of values of state variables included in an evaluation function may fall into a local solution and become unable to escape from the local solution. In this case, a solution finding time may become long.

In one aspect, an object is to facilitate an escape from a local solution of a combinatorial optimization problem.

SOLUTION TO PROBLEM

According to an aspect of the embodiments, there is provided a program including instructions which, when executed by a computer, cause the computer to execute processing including: searching for a solution to a combinatorial optimization problem through a local search, in a first search range that is based on a plurality of state variables; determining whether or not a current state represented by a combination of values of the plurality of state variables has fallen into a local solution in a search in the first search range; in a case where it is determined that the current state has fallen into the local solution, determining a first solution candidate, based on a plurality of solution candidates stored in a storage unit; and performing, in a state in which a value of a first state variable that has a mutually equal value between the current state and the first solution candidate among the plurality of state variables is fixed, the local search in a second search range that is based on a second state variable that has mutually different values between the current state and the first solution candidate among the plurality of state variables.

ADVANTAGEOUS EFFECTS OF INVENTION

In one aspect, an escape from a local solution of a combinatorial optimization problem may be facilitated.

BRIEF DESCRIPTION OF DRAWINGS

FIG. 1 is a diagram illustrating an example of a data processing apparatus according to a first embodiment and a processing procedure thereof;
FIG. 2 is a diagram illustrating an example in which a current state has fallen into a local solution;
FIG. 3 is a diagram illustrating an example of a data processing apparatus according to a second embodiment and a processing procedure thereof;
FIG. 4 is a block diagram illustrating a hardware example of a data processing apparatus according to a third embodiment;
FIG. 5 is a block diagram illustrating a functional example of the data processing apparatus;
FIG. 6 is a block diagram illustrating a functional example of a search processing unit;
FIG. 7 is a diagram illustrating an example in which a plurality of replicas are used;
FIG. 8 is a flowchart illustrating a flow of a first processing procedure of the data processing apparatus;
FIG. 9 is a flowchart illustrating a flow of a second processing procedure of the data processing apparatus;
FIG. 10 is a diagram schematically illustrating a method of determining an elite solution based on a path relinking method; and
FIG. 11 is a diagram illustrating another example of the data processing apparatus.

DESCRIPTION OF EMBODIMENTS

Hereinafter, embodiments of the present disclosure will be described with reference to the drawings.

(First Embodiment)

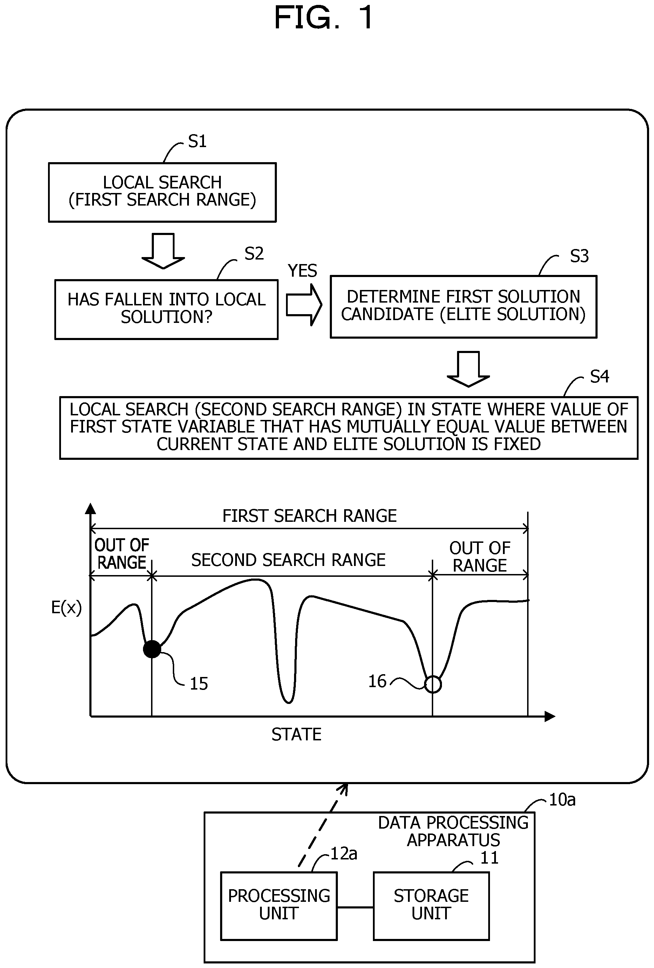

FIG. 1 is a diagram illustrating an example of a data processing apparatus according to a first embodiment and a processing procedure thereof. A data processing apparatus 10a according to the first embodiment searches for a solution to a combinatorial optimization problem through a local search. The data processing apparatus 10a may be a client apparatus or a server apparatus. The data processing apparatus 10a may also be called a computer.
The data processing apparatus 10a according to the first embodiment includes a storage unit 11 and a processing unit 12a.
The storage unit 11 may include a volatile semiconductor memory such as a random-access memory (RAM), or may include a non-volatile storage such as a hard disk drive (HDD) or a flash memory. The storage unit 11 may include both of the volatile semiconductor memory and the non-volatile storage.
The storage unit 11 stores problem information of a combinatorial optimization problem. The combinatorial optimization problem may be formulated by an Ising-type evaluation function. For example, the combinatorial optimization problem is replaced with a problem of minimizing a value of the Ising-type evaluation function.
The Ising-type evaluation function is represented by, for example, Expression (1) below.

$$E(\boldsymbol{x}) = -\frac{1}{2} \sum_{i=1}^{N} \sum_{j=1}^{N} W_{ij} x_i x_j - \sum_{i=1}^{N} b_i x_i \qquad (1)$$

A state vector x has a plurality of state variables as elements, and represents a state of an Ising model. Expression (1) represents an evaluation function formulated in a quadratic unconstrained binary optimization (QUBO) format. In a case of a problem of maximizing the value of the evaluation function, the sign of the evaluation function may be reversed.
A first term on a right side of Expression (1) denotes a result obtained by adding up products of values of two state variables and a weight coefficient without omission and duplication for all combinations of two state variables that are selectable from all the state variables. Suffixes i and j are indices of the state variables. $x_i$ denotes an i-th state variable. $X_j$ denotes a j-th state variable. $W_{ij}$ denotes a weight between the i-th state variable and the j-th state variable or a weight coefficient indicating a strength of coupling. $W_{ij} = W_{ji}$ and $W_{ii} = 0$ hold. N denotes the total number of state variables.
A second term on the right side of Expression (1) is a total sum of products of a bias of each of all the state variables and the value of the state variable. $b_i$ denotes a bias for the i-th state variable. The problem information of the combinatorial optimization problem stored in the storage unit 11 includes the weight coefficients, the biases, and the like included in the evaluation function described above.

The storage unit 11 may store a calculation condition of the local search. When a local search based on the simulated annealing method is performed, examples of the calculation condition include a maximum value of a temperature parameter (hereinafter, referred to as a highest temperature), a temperature parameter change schedule, a minimum value of the temperature parameter (hereinafter, referred to as a lowest temperature), a search end condition, and so on. When a local search based on the replica exchange method is performed, examples of the calculation condition include a highest temperature, a lowest temperature, the number of replicas, a replica exchange frequency, a search end condition, and so on.

The storage unit 11 further stores a plurality of solution candidates for the combinatorial optimization problem and values of the evaluation function for the respective solution candidates. Each of the plurality of solution candidates is represented by a state (a combination of values of a plurality of state variables) at a time when the minimum value among the values of the evaluation function obtained during the search in the local search is updated.

When the value of the evaluation function corresponding to the state obtained during the search is a value smaller than the minimum value of the evaluation function obtained so far, that state is stored in the storage unit 11 as a solution candidate. For example, whenever the minimum value is updated, a new solution candidate is stored in the storage unit 11 together with the corresponding value of the evaluation function. The storage unit 11 stores the minimum value of the values of the evaluation function obtained so far.

When the local searches are performed under a plurality of calculation conditions different from each other, the plurality of solution candidates may include a solution candidate obtained in each of the local searches performed under the plurality of calculation conditions (such as different temperature conditions or different initial states). In this case, the solution candidate obtained in each local search may be used in common when a first solution candidate (described later) is determined in each local search.

In the problem of maximizing the value of the evaluation function, each of the plurality of solution candidates is represented by a state at a time when the maximum value among values of the evaluation function obtained during a search in the local search is updated.

The processing unit 12a may be implemented by, for example, an electronic circuit such as an application specific integrated circuit (ASIC) or a field programmable gate array (FPGA). However, the processing unit 12a may be implemented by a processor such as a central processing unit (CPU), a graphics processing unit (GPU), or a digital signal processor (DSP). For example, the processor executes a program stored in a memory such as a RAM (which may be the storage unit 11). A set of processors may be called a multiprocessor or simply a "processor". The processing unit 12a may include a processor and an electronic circuit such as an ASIC or an FPGA.

The processing unit 12a searches for a solution to a combinatorial optimization problem through a local search.

The local search is performed by using a change amount ($\Delta E_i$) of the value of the evaluation function in response to a change in $x_i$. $\Delta E_i$ is represented by Expression (2) below.

$$\Delta E_i = (2x_i - 1)\left(\sum_j W_{ij}x_j + b_i\right) \qquad (2)$$

When $x_i$ that satisfies $\Delta E_i > 0$ changes, the value of Expression (1) decreases. For each of the plurality of state variables, the processing unit 12a calculates $\Delta E_i$ due to a change in the value of one state variable among the plurality of state variables. The change in $x_i$ is probabilistically accepted in a form in which a change that decreases the value of the evaluation function is prioritized.

At this time, with a steepest descent method, if the state falls into a local solution, the state becomes unable to escape. Accordingly, the processing unit 12a uses a Metropolis method or a Gibbs method in determining a transition probability from a certain state to a next state due to a change of a certain state variable. For example, the processing unit 12a also probabilistically permits a change that increases the value of the evaluation function, in accordance with a comparison between $\Delta E_i$ and a thermal noise value. The thermal noise value is obtained based on a value of the temperature parameter or a random number. As the value of temperature parameter increases, an amplitude of the thermal noise value increases. As the amplitude of the thermal noise value increases, a state transition with a large increase amount of the value of the evaluation function is more likely to be permitted.

For example, with the simulated annealing method, the processing unit 12a gradually changes the value of the temperature parameter from the highest temperature to the lowest temperature in accordance with a predetermined temperature parameter change schedule. Consequently, the amplitude of the thermal noise value decreases, and the state of the Ising model converges to a ground state.

In the local search that adopts the MCMC method such as the simulated annealing method, a Rackwitz Fiessler (RF) method, or the like, a change in the state variable that increases the value of the evaluation function is also permitted.

However, a problem presented below may occur.

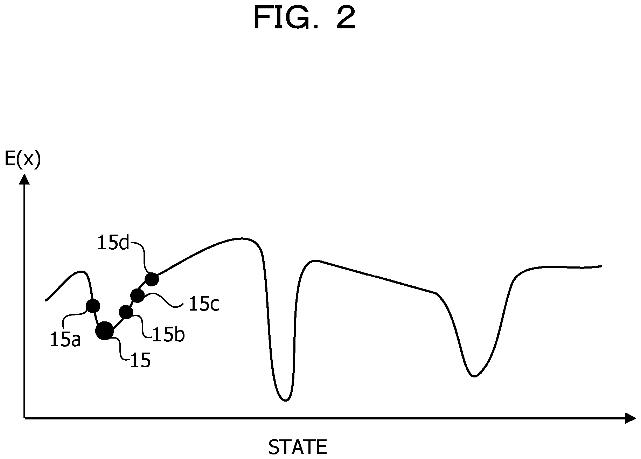

FIG. 2 is a diagram illustrating an example in which a current state falls into a local solution. A horizontal axis represents the state, and a vertical axis represents the value of the evaluation function (E(x)).

In the example in FIG. 2, a state 15 has fallen into a local solution where the value of the evaluation function is minimal. In the local search that adopts the MCMC method, the RF method, or the like, once the state falls into a local solution, only states around the local solution, for example, states 15a to 15d, may be obtained and the state may be constrained to the same local solution again.

Accordingly, to facilitate an escape from the local solution of the combinatorial optimization problem, the processing unit 12a performs processing below. FIG. 1 illustrates an example of a flow of processing performed by the processing unit 12a to facilitate the escape from the local solution.

Step S1: The processing unit 12a performs the local search described above in a first search range that is based on a plurality of state variables (for example, all state variables included in E(x)).

Step S2: The processing unit 12a determines whether or not the current state represented by the combination of the values of the plurality of state variables has fallen into a local solution in the search in the first search range. For example, the processing unit 12a determines that the current state has fallen into the local solution when the minimum value among the values of the evaluation function obtained during the search is not updated for a predetermined period.

In the problem of maximizing the value of the evaluation function, the processing unit 12a determines that the current state has fallen into the local solution when the maximum value among the values of the evaluation function obtained during the search is not updated for a predetermined period.

Step S3: In a case where the processing unit 12a determines that the current state has fallen into the local solution, the processing unit 12a determines a first solution candidate (hereinafter, referred to as an elite solution) based on the above-described plurality of solution candidates stored in the storage unit 11.

The elite solution is, for example, a solution candidate of which a Hamming distance from the current state is closest to a threshold among the plurality of solution candidates stored in the storage unit 11. It is conceivable to use, as the elite solution, a solution candidate of which the Hamming distance from the current state is closest. However, in this case, in processing in step S4 (described later), a state transition from the current state to the elite solution may occur, and thereafter, the search may not proceed any further. As the threshold, for example, a value of about 20% of the total number of state variables is used. Note that the threshold may be changed as appropriate.

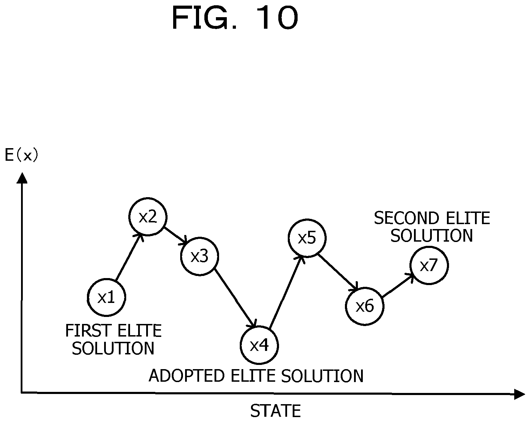

Alternatively, the elite solution may be determined based on a path relinking (PR) method by using two solution candidates randomly selected from the plurality of solution candidates stored in the storage unit 11. The method of determining an elite solution based on the path relinking method will be described later (see FIG. 10).

Step S4: The processing unit 12a performs the local search in a state in which the value of a first state variable that has a mutually equal value between the current state and the elite solution among the plurality of state variables is fixed. The local search in the processing in step S4 is performed in a second search range that is based on a second state variable that has mutually different values between the current state and the elite solution among the plurality of state variables.

The local search in the second search range corresponds to, for example, a local search using an evaluation function of Expression (3) below.

$$E(\boldsymbol{x}) = -\frac{1}{2} \sum_{i \in mismatch} \sum_{j \in mismatch} W_{ij} x_i x_j - \sum_{i \in mismatch} b_i x_i$$
$$mismatch = \{i | x_i \neq x_i^*\} \tag{3}$$

In Expression (3), "mismatch" represents a set of identification numbers of second state variables that have mutually different values between the current state and the elite solution among the plurality of state variables. $X_i^*$ represents an i-th state variable of the elite solution.

FIG. 1 illustrates the state 15 and an elite solution 16 as examples of the current state and the elite solution, respectively. FIG. 1 also illustrates an example of the first search range and an example of the second search range.

When it is determined that the current state has fallen into the local solution and the elite solution 16 is determined, the value of the first state variable that has a mutually equal value between the state 15, which is the current state, and the elite solution 16 among the plurality of state variables is fixed. The local search is then performed in the second search range that is based on the second state variable that has mutually different values between the state 15, which is the current state, and the elite solution 16 among the plurality of state variables.

This consequently creates the directivity of the state transition from the state 15, which is the current state that has fallen into the local solution, to a direction in which a possibility of finding a better state (with a smaller value of E(x)) increases (a direction approaching the elite solution 16), and facilitates the escape from the local solution. Consequently, the solution finding time may be shortened.

In the local search in the second search range, the search range is more limited than the first search range. Thus, an amount of calculation for the processing for escaping from the local solution may be reduced.

The processing unit 12a determines whether or not the current state has escaped from the local solution during the search in the second search range. In a case where the minimum value among the values of the evaluation function obtained during the search in the second search range is updated, the processing unit 12a determines that the current state has escaped from the local solution. When the processing unit 12a determines that the current state has escaped from the local solution, the processing unit 12a cancels fixing of the value of the first state variable and performs the local search in the first search range. Consequently, the local search in a wide search range is enabled again.

When the processing unit 12a determines that the current state has not escaped from the local solution within a predetermined period during the search in the second search range, the processing unit 12a may determine a second solution candidate different from the above-described elite solution, based on the plurality of solution candidates stored in the storage unit 11. In this case, the processing unit 12a fixes a value of a third state variable that has a mutually equal value between the current state and the second solution candidate among the plurality of state variables. The processing unit 12a then may perform the local search in a third search range that is based on a fourth state variable that has mutually different values between the current state and the second solution candidate among the plurality of state variables. This increases the possibility of successfully escaping from the local solution.

When various problems in modern society that are convertible into a combinatorial optimization problem are solved, the data processing apparatus 10a described above may be expected to be useful as an apparatus for reducing an amount of computation and a physical amount of hardware and for obtaining an accurate solution in a short period.

(Second Embodiment)

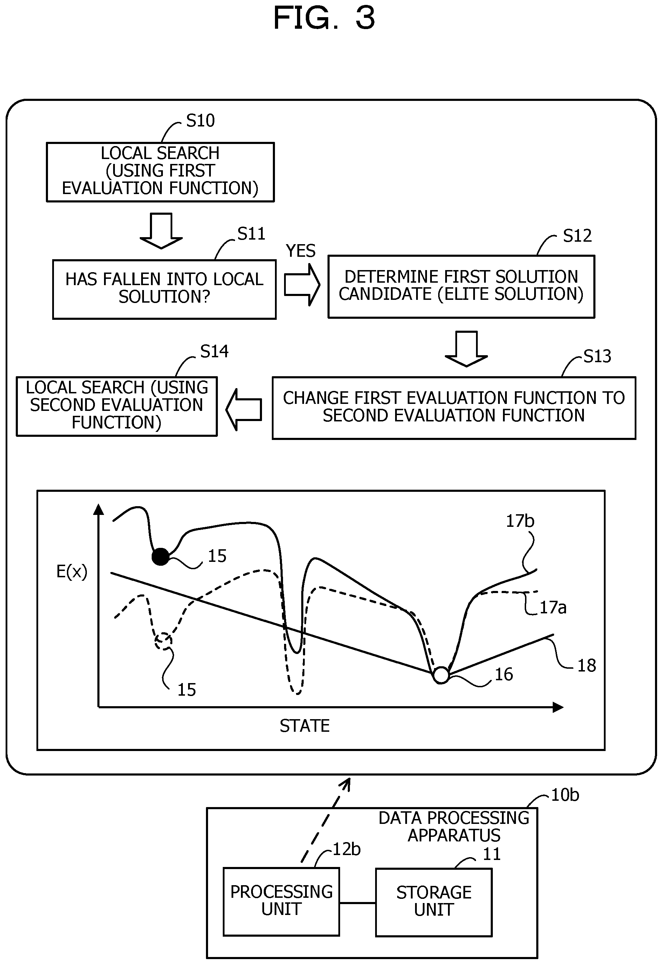

FIG. 3 is a diagram illustrating an example of a data processing apparatus according to a second embodiment and a processing procedure thereof. The same elements as the elements illustrated in FIG. 1 are denoted by the same reference signs. As in the data processing apparatus 10a according to the first embodiment, a processing unit 12b of a data processing apparatus 10b according to the second embodiment also searches for a solution to a combinatorial optimization problem through a local search. The processing unit 12b is different from the processing unit 12a in a method of facilitating an escape from a local solution. The processing unit 12b may also be implemented by substantially the same hardware as that of the processing unit 12a.

To facilitate the escape from the local solution of the combinatorial optimization problem, the processing unit 12b performs processing below. FIG. 3 illustrates an example of a flow of processing performed by the processing unit 12b.

Step S10: The processing unit 12b searches for a solution to a combinatorial optimization problem through a local search using a first evaluation function. As the first evaluation function, the evaluation function represented by Expression (1) may be used. Similarly to the processing unit 12a in the first embodiment, the processing unit 12b may perform the local search by using the MCMC method such as the simulated annealing method, the RF method, or the like.

Step S11: The processing unit 12b determines whether or not the current state represented by a combination of values of a plurality of state variables included in the first evaluation function has fallen into a local solution in the search using the first evaluation function. For example, the processing unit 12b determines that the current state has fallen into the local solution when the minimum value among the values of the first evaluation function obtained during the search is not updated for a predetermined period.

In the problem of maximizing the value of the evaluation function, the processing unit 12b determines that the current state has fallen into the local solution when the maximum value among the values of the first evaluation function obtained during the search is not updated for a predetermined period.

Step S12: In a case where the processing unit 12b determines that the current state has fallen into the local solution, the processing unit 12b determines an elite solution, based on a plurality of solution candidates stored in the storage unit 11. The method of determining the elite solution may be the same as the method described in the first embodiment.

Step S13: The processing unit 12b changes the first evaluation function to a second evaluation function obtained by adding, to the first evaluation function, a first constraint term that has a magnitude proportional to a Hamming distance between the elite solution and the current state. The second evaluation function may be represented by, for example, Expression (4) below.

$$E(\boldsymbol{x}) = -\frac{1}{2}\sum_{i=1}^{N}\sum_{j=1}^{N} W_{ij}x_i x_j - \sum_{i=1}^{N} b_i x_i + \lambda \sum_{i=1}^{N}(x_i + x_i^* - 2x_i x_i^*) \quad (4)$$

A third term on a right side of Expression (4) denotes the first constraint term that has the magnitude proportional to the Hamming distance. λ denotes a positive proportional coefficient. The first constraint term has a larger value as the Hamming distance is larger.

Step S14: The processing unit 12b performs the local search by using the second evaluation function.

FIG. 3 illustrates the state 15 and the elite solution 16 as examples of the current state and the elite solution, respectively. FIG. 3 illustrates examples of a first evaluation function 17a, a second evaluation function 17b, and a first constraint term 18. The first constraint term 18 is smallest in the same state as the elite solution 16 (Hamming distance = 0), and increases as the state becomes farther from the elite solution 16 (as the Hamming distance increases). By adding such a first constraint term 18 to the first evaluation function 17a, the second evaluation function 17b is obtained. Consequently, the value of the second evaluation function 17b in the state 15, which is the current state, is larger than the value of the first evaluation function 17a.

When it is determined that the current state has fallen into the local solution and the elite solution 16 is determined, the first evaluation function 17a is changed to the second evaluation function 17b obtained by adding, to the first evaluation function 17a, the first constraint term 18 that has the magnitude proportional to the Hamming distance between the elite solution 16 and the current state. The local search is performed by using the second evaluation function 17b.

The second evaluation function 17b indicates a greater tendency that the value at the elite solution 16 decreases, than the first evaluation function 17a. This consequently creates the directivity of the state transition from the state 15, which is the current state, to a direction in which a possibility of finding a better state (with a smaller value of E(x)) increases (a direction approaching the elite solution 16), and facilitates the escape from the local solution. Consequently, the solution finding time may be shortened.

The processing unit 12b determines whether or not the current state has escaped from the local solution during the search using the second evaluation function. In a case where the minimum value among the values of the evaluation function obtained during the search using the second evaluation function is updated, the processing unit 12b determines that the current state has escaped from the local solution. When the processing unit 12b determines that the current state has escaped from the local solution, the processing unit 12b returns the evaluation function in use from the second evaluation function to the first evaluation function, and performs the local search using the first evaluation function. Consequently, after the escape from the local solution is achieved, the local search using the original first evaluation function is enabled again.

When the processing unit 12b determines that the current state has not escaped from the local solution within a predetermined period during the search using the second evaluation function, the processing unit 12b may determine a second solution candidate different from the above-described elite solution, based on the plurality of solution candidates stored in the storage unit 11. In this case, the processing unit 12b changes the second evaluation function to a third evaluation function obtained by adding, to the second evaluation function, a second constraint term that has a magnitude proportional to a Hamming distance between the second solution candidate and the current state. The processing unit 12b may perform the local search by using the third evaluation function. This increases the possibility of successfully escaping from the local solution.

When various problems in modern society that are convertible into a combinatorial optimization problem are solved, the data processing apparatus 10b described above may also be expected to be useful as an apparatus for reducing an amount of computation and a physical amount of hardware and for obtaining an accurate solution in a short period.

(Third Embodiment)

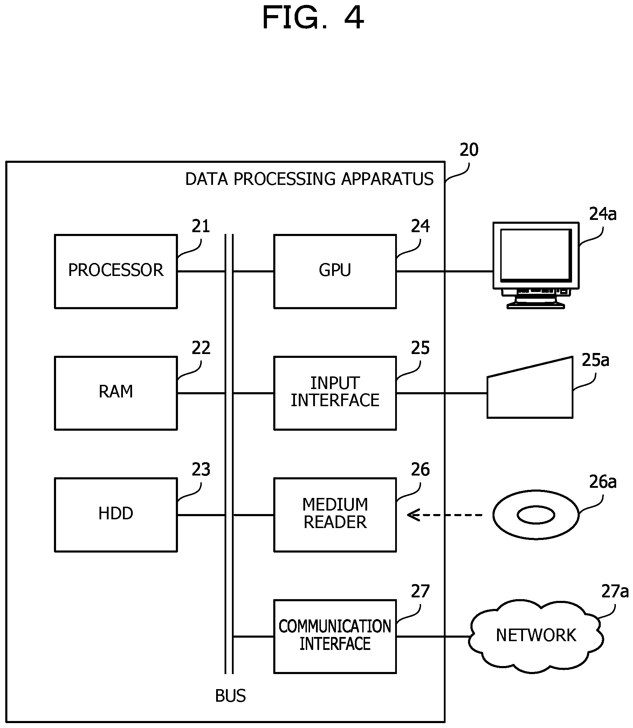

FIG. 4 is a block diagram illustrating a hardware example of a data processing apparatus according to a third embodiment.

For example, a data processing apparatus 20 is a computer, and includes a processor 21, a RAM 22, an HDD 23, a GPU 24, an input interface 25, a medium reader 26, and a communication interface 27. The above units are coupled to a bus.

The processor 21 is a processor such as a GPU or CPU including an arithmetic circuit that executes instructions of a program. The processor 21 loads at least a part of a program and data stored in the HDD 23 into the RAM 22 and executes the program. The processor 21 may include a plurality of processor cores. The data processing apparatus 20 may include a plurality of processors. A set of a plurality of processors (multiprocessor) may be referred to as a "processor".

The RAM 22 is a volatile semiconductor memory that temporarily stores a program to be executed by the processor 21 and data to be used for computation by the processor 21. The data processing apparatus 20 may include a memory of a type other than the RAM 22, or may include a plurality of memories.

The HDD 23 is a non-volatile storage device that stores a program of software such as an operating system (OS), middleware, and application software, and data. For example, the program includes a program for causing the data processing apparatus 20 to execute processing of searching for a solution to a combinatorial optimization problem. The data processing apparatus 20 may include a storage device of another type such as a flash memory or a solid-state drive (SSD), or may include a plurality of non-volatile storage devices.

The GPU 24 outputs an image to a display 24a coupled to the data processing apparatus 20 in accordance with an instruction from the processor 21. As the display 24a, a cathode ray tube (CRT) display, a liquid crystal display (LCD), a plasma display panel (PDP), an organic electro-luminescence (OEL) display, or the like may be used.

The input interface 25 acquires an input signal from an input device 25a coupled to the data processing apparatus 20, and outputs the input signal to the processor 21. As the input device 25a, a pointing device such as a mouse, a touch panel, a touchpad, or a trackball, a keyboard, a remote controller, a button switch, or the like may be used. A plurality of kinds of input devices may be coupled to the data processing apparatus 20.

The medium reader 26 is a reading device that reads a program or data recorded on a recording medium 26a. For example, as the recording medium 26a, a magnetic disk, an optical disk, a magneto-optical (MO) disk, a semiconductor memory, or the like may be used. The magnetic disk includes a flexible disk (FD) or an HDD. The optical disk includes a compact disc (CD) or a Digital Versatile Disc (DVD).

For example, the medium reader 26 copies a program or data read from the recording medium 26a to another recording medium such as the RAM 22 or the HDD 23. For example, the read program is executed by the processor 21. The recording medium 26a may be a portable-type recording medium, and may be used for distribution of the program or the data. The recording medium 26a or the HDD 23 may be referred to as a computer-readable recording medium.

The communication interface 27 is an interface that is coupled to a network 27a and that performs communication with another information processing apparatus via the network 27a. The communication interface 27 may be a wired communication interface coupled to a communication device such as a switch by a cable, or may be a wireless communication interface coupled to a base station via a wireless link.

Next, functions of the data processing apparatus 20 will be described.

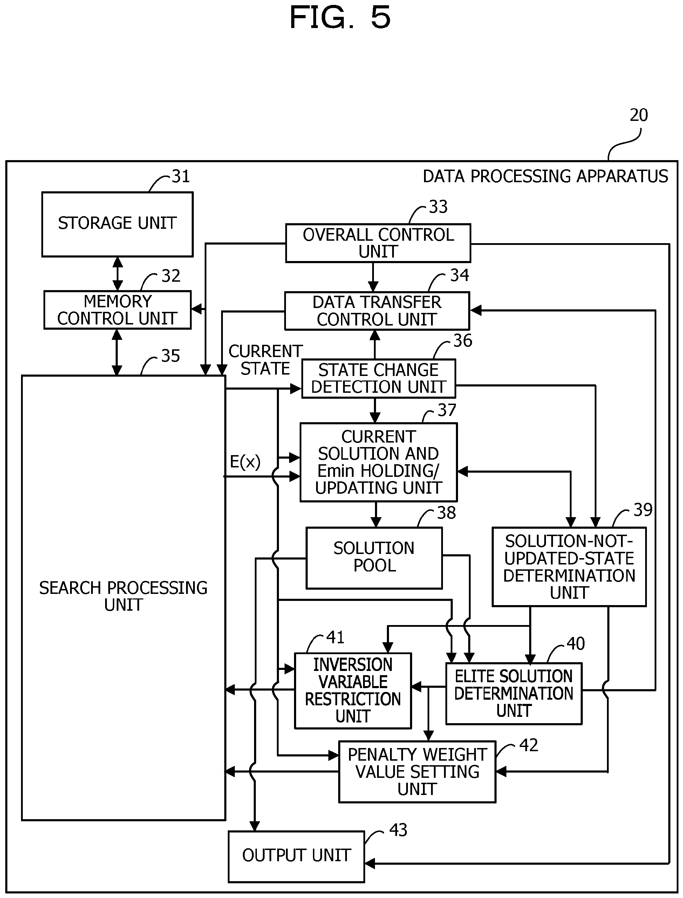

FIG. 5 is a block diagram illustrating a functional example of the data processing apparatus.

The data processing apparatus 20 includes a storage unit 31, a memory control unit 32, an overall control unit 33, a data transfer control unit 34, a search processing unit 35, a state change detection unit 36, a current solution and Emin holding/updating unit 37, and a solution pool 38. The data processing apparatus 20 further includes a solution-not-updated-state determination unit 39, an elite solution determination unit 40, an inversion variable restriction unit 41, a penalty weight value setting unit 42, and an output unit 43.

With these components, substantially the same functions as those of the storage unit 11 and the processing unit 12a illustrated in FIG. 1 or those of the storage unit 11 and the processing unit 12b illustrated in FIG. 3 are implemented.

For example, the storage unit 31 is implemented by using a storage area allocated in the RAM 22 or the HDD 23. The other elements may be implemented by using, for example, a program module executed by the processor 21 and a storage area (register or cache memory) in the processor 21. The search processing unit 35, the current solution and Emin holding/updating unit 37, and the solution pool 38 may be implemented by using a storage area allocated in the RAM 22 or the HDD 23.

For example, the storage unit 31 stores problem information of a combinatorial optimization problem, a calculation condition of a local search, and the like. For example, the problem information includes $W_{ij}$ and $b_i$ in Expression (1). When a local search based on the simulated annealing method is performed, examples of the calculation condition include a highest temperature, a temperature parameter change schedule, a lowest temperature, a search end condition, and so on. When a local search based on the replica exchange method is performed, examples of the calculation condition include a highest temperature, a lowest temperature, the number of replicas, a replica exchange frequency, a search end condition, and so on.

These pieces of data may be input through an operation on the input device 25a by a user and stored in the storage unit 31, or may be input via the recording medium 26a or the network 27a and stored in the storage unit 31.

The memory control unit 32 controls reading and writing of data from and to the storage unit 31.

The overall control unit 33 controls processing of each unit of the data processing apparatus 20.

The data transfer control unit 34 controls transfer of data such as a weight value held in the search processing unit 35.

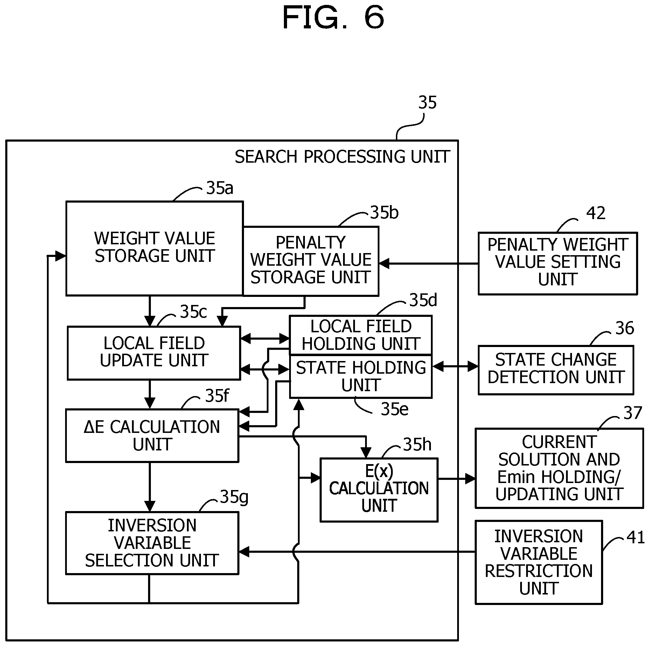

The search processing unit 35 performs a local search. An example of the search processing unit 35 will be described later (see FIG. 6).

When the search processing unit 35 performs a local search, the state change detection unit 36 detects a change in the state represented by the combination of values of the plurality of state variables.

The current solution and Emin holding/updating unit 37 holds minimum energy (hereinafter, referred to as Emin) that is the minimum value among values of the evaluation function (E(x)) obtained so far and, as a current solution, a state at a time when Emin is obtained. When the value of E(x) obtained during the search is smaller than Emin, the current solution and Emin holding/updating unit 37 updates the current solution with the current state at that time and updates the value of Emin with the value of E(x) at that time.

The solution pool 38 registers (stores), as a solution candidate, the current solution which is the current state at a time when Emin is updated. The solution pool 38 also stores the value of Emin corresponding to that current solution. When a plurality of local searches are performed under calculation conditions different from each other, the solution pool 38 may store the solution candidate and Emin obtained in each of the local searches.

The solution-not-updated-state determination unit 39 determines whether or not the current state has fallen into a local solution during the search in the local search. When Emin is in a state of not being updated for a predetermined period (hereinafter, also referred to as a solution-not-updated state), the solution-not-updated-state determination unit 39 determines that the current state has fallen into a local solution.

The elite solution determination unit 40 determines, as an elite solution, a solution candidate of which a Hamming distance from the current state is closest to a threshold among the plurality of solution candidates stored in the solution pool 38. As the threshold, for example, a value of about 20% of the total number of state variables is used. The threshold may be changed as appropriate. The elite solution determination unit 40 may determine an elite solution by using the path relinking method (described later) (see FIG. 10).

When the elite solution is determined, the inversion variable restriction unit 41 fixes the value of the state variable that has a mutually equal value between the current state and the elite solution among the plurality of state variables. For example, the inversion variable restriction unit 41 restricts the state variable whose value is to be inverted from 0 to 1 or from 1 to 0.

When the elite solution is determined, the penalty weight value setting unit 42 calculates a penalty weight value for changing the first evaluation function to a second evaluation function obtained by adding, to the first evaluation function, a constraint term that has a magnitude proportional to a Hamming distance between the elite solution and the current state. The second evaluation function is represented by Expression (4) above. The constraint term that is the third term on the right side of Expression (4) may be incorporated into $W_{ij}$ of the first term on the right side. The penalty weight value setting unit 42 calculates, as the penalty weight value, $W_{ij}$ in which the constraint term is incorporated. The penalty weight value setting unit 42 sets the calculated penalty weight value in the search processing unit 35.

When the search end condition is satisfied, the output unit 43 outputs, as a search result, the solution candidate and the corresponding value of the evaluation function stored in the solution pool 38, for example. For example, the output unit 43 may output and display the calculation result on the display 24a, transmit the calculation result to another information processing apparatus via the network 27a, or store the calculation result in an external storage device.

FIG. 6 is a block diagram illustrating a functional example of the search processing unit.

The search processing unit 35 includes a weight value storage unit 35a, a penalty weight value storage unit 35b, a local field update unit 35c, a local field holding unit 35d, a state holding unit 35e, a ΔE calculation unit 35f, an inversion variable selection unit 35g, and an E(x) calculation unit 35h.

The weight value storage unit 35a stores $W_{ij}$ included in E(x) of Expression (1).

The penalty weight value storage unit 35b stores, as $W_{ij}$, the penalty weight value set by the penalty weight value setting unit 42.

When the value of the state variable is inverted, the local field update unit 35c updates a value of a local field corresponding to each state variable by using $W_{ij}$. A local field ($h_i$) corresponding to $x_i$ may be represented by Expression (5) below.

$$h_i = \sum_j W_{ij} x_j + b_i \qquad (5)$$

When the value of $x_j$ is inverted, the local field corresponding to each state variable is updated by adding $W_{ij}\Delta x_j$. $\Delta x_j$ is a change amount of $x_j$ when the value of $x_j$ is inverted, and is represented by 1 - $2x_j$.

When the evaluation function is represented by using N state variables, the local field update unit 35c is capable of updating N local fields in parallel.

The local field holding unit 35d holds the value of the local field corresponding to each state variable.

The state holding unit 35e holds a state represented by the current value of each state variable. When a state variable whose value is to be inverted is selected, the state holding unit 35e inverts the value of that state variable and holds the inverted value.

By using the local field, the ΔE calculation unit 35f calculates ΔE that is a change amount of the value of the evaluation function in a case where the value of each state variable is inverted. $\Delta E_i$ in a case where the value of $x_i$ is inverted may be represented as $\Delta E_i = -h_i\Delta x_i$ by using $h_i$. When the evaluation function is represented by using N state variables, the ΔE calculation unit 35f is capable of calculating N ΔEs in parallel.

Based on a result of comparison between ΔE output by the ΔE calculation unit 35f and a predetermined value, the inversion variable selection unit 35g selects a state variable whose value is to be inverted. For example, the predetermined value is a noise value obtained based on a uniform random number (rand) that is greater than 0 and less than 1 and the value of the temperature parameter (T). In a case of $\max(0, \Delta E_i) < -\log(\text{rand}) \times T$, the inversion variable selection unit 35g permits inversion of the value of $x_i$. In a case where there are a plurality of state variables whose values are permitted to be inverted, the inversion variable selection unit 35g selects one state variable randomly or in accordance with a predetermined rule.

In a case where a state variable whose value is to be fixed is designated by the inversion variable restriction unit 41, the inversion variable selection unit 35g does not select the state variable as the state variable whose value is to be inverted even when inversion of the value of that state variable is permitted.

When there is a state variable whose value is to be inverted, the E(x) calculation unit 35h calculates E(x) by using $\Delta E$ in a case where the value of that state variable is inverted.

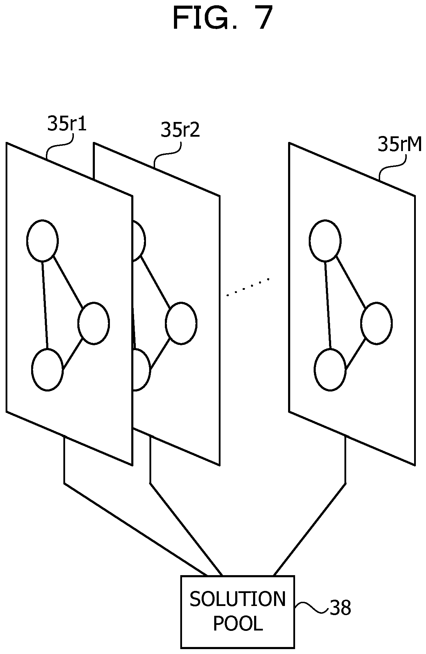

FIG. 7 is a diagram illustrating an example in which a plurality of replicas are used.

Replicas 35r1, 35r2, ..., and 35rM perform the processing of the search processing unit 35 illustrated in FIG. 6 in parallel under calculation conditions (such as the value of the temperature parameter, the initial state, or the seed of the uniform random number) different from each other. For example, each of the replicas 35r1 to 35rM may have the individual functions of the search processing unit 35.

The solution pool 38 stores solution candidates obtained by the respective replicas 35r1 to 35rM. The solution candidates stored in the solution pool 38 may be used when an elite solution is determined in each of the replicas 35r1 to 35rM. For example, the solution pool 38 functions as a shared memory for the individual replicas 35r1 to 35rM.

When the current state has fallen into a local solution, each of the replicas 35r1 to 35rM may determine an elite solution, based on the solution candidates obtained by the other replicas in the solution pool 38. Thus, the possibility of successfully escaping from the local solution increases and the solution finding performance improves.

Next, two examples of a processing procedure of the data processing apparatus 20 will be described. A first processing procedure uses the inversion variable restriction unit 41. A second processing procedure uses the penalty weight value setting unit 42. The overall control unit 33 may perform control such that one of the first processing procedure and the second processing procedure is performed, or may perform control such that each processing procedure is switched at a predetermined timing and performed.

(First Processing Procedure)

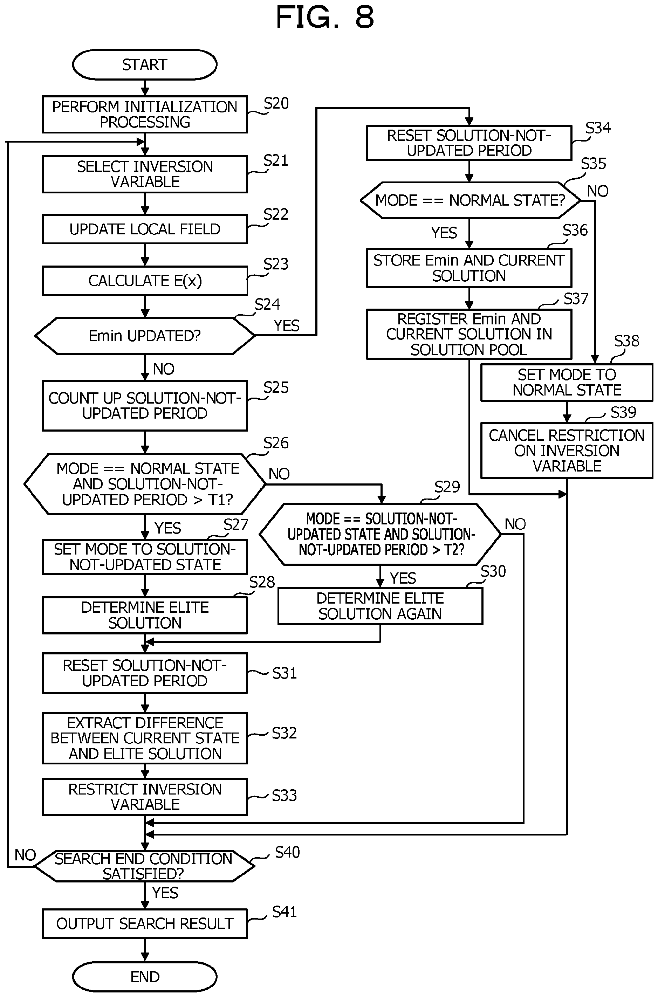

FIG. 8 is a flowchart illustrating a flow of the first processing procedure of the data processing apparatus.

Step S20: Initialization processing is performed. In the initialization processing, for example, processing below is performed. The overall control unit 33 causes the memory control unit 32 to read $W_{ij}$ stored in the storage unit 31. The read $W_{ij}$ is stored in the weight value storage unit 35a of the search processing unit 35.

Initial values of the respective state variables are held in the state holding unit 35e. Initial values of the respective local fields are held in the local field holding unit 35d. An initial value of E(x) is held in the E(x) calculation unit 35h. When these initial values are stored in the storage unit 31, the initial values are read from the storage unit 31. The overall control unit 33 may determine the initial values of the respective state variables randomly or in accordance with a predetermined rule. By using the initial values of the respective state variables and $W_{ij}$ and $b_i$ of Expression (1), the overall control unit 33 may calculate the initial values of the respective local fields and the initial value of E(x). The solution-not-updated-state determination unit 39 resets, to 0, a solution-not-updated period indicating a period for which Emin is not updated. In the current solution and Emin holding/updating unit 37, the initial values of the respective state variables are set as the initial value of the current solution, and Emin corresponding to the initial value of the current solution is set as the initial value of Emin.

When the calculation condition is stored in the storage unit 31, the calculation condition is read and set in, for example, the overall control unit 33 under the control of the memory control unit 32. Under the control of the overall control unit 33, the solution-not-updated-state determination unit 39 sets, as an initial mode, a normal state among two modes of the normal state and the solution-not-updated state.

Step S21: Based on a result of comparison between $\Delta E$ output by the $\Delta E$ calculation unit 35f and the predetermined value described above, the inversion variable selection unit 35g selects a state variable whose value is to be inverted.

Step S22: Based on the selected state variable, the local field update unit 35c updates the value of the local field corresponding to each state variable by using $W_{ij}$.

Step S23: The E(x) calculation unit 35h calculates E(x) by using $\Delta E$ in a case where the value of the selected state variable is inverted.

Step S24: The current solution and Emin holding/updating unit 37 determines whether Emin is updated. When it is determined that Emin is not updated, processing of step S25 is performed. When it is determined that Emin is updated, processing of step S34 is performed.

Step S25: The solution-not-updated-state determination unit 39 counts up the solution-not-updated period by + 1.

Step S26: The solution-not-updated-state determination unit 39 determines whether or not the mode is the normal state and the solution-not-updated period is longer than a predetermined period T1. When it is determined that the mode is the normal state and the solution-not-updated period is longer than the predetermined period T1, processing of step S27 is performed. When it is determined that the mode is not the normal state or the solution-not-updated period is equal to or shorter than the predetermined period T1, processing of step S29 is performed.

Step S27: The solution-not-updated-state determination unit 39 sets the mode to the solution-not-updated state. For example, the solution-not-updated state indicates a state in which the current state has fallen into a local solution.

Step S28: The elite solution determination unit 40 determines, as an elite solution, a solution candidate of which a Hamming distance from the current state is closest to a threshold, among the plurality of solution candidates stored in the solution pool 38.

Step S29: The solution-not-updated-state determination unit 39 determines whether or not the mode is the solution-not-updated state and the solution-not-updated period is longer than a predetermined period T2. T2 may be equal to T1 (T2 = T1), or T2 may be different from T1 in length. When it is determined that the mode is the solution-not-updated state and the solution-not-updated period is longer than the predetermined period T2, processing of step S30 is performed. When it is determined that the mode is not the solution-not-updated state or when it is determined that the solution-not-updated period is equal to or shorter than the predetermined period T2, processing of step S40 is performed.

Step S30: The elite solution determination unit 40 again determines, as an elite solution, a solution candidate of which a Hamming distance from the current state is closest to the threshold, among the solution candidates not yet adopted as the elite solution(s) among the plurality of solution candidates stored in the solution pool 38.

After the processing of step S28 or S30, processing of step S31 is performed.

Step S31: The solution-not-updated-state determination unit 39 resets the solution-not-updated period to 0.

Step S32: The inversion variable restriction unit 41 extracts a difference between the current state and the determined elite solution. The difference is a state variable that has mutually different values between the current state and the elite solution among the plurality of state variables.

Step S33: The inversion variable restriction unit 41 restricts inversion of the value of a state variable other than the extracted difference, for example, a state variable that has a mutually equal value between the current state and the elite solution among the plurality of state variables. Thereafter, the processing of step S40 is performed.

Step S34: The solution-not-updated-state determination unit 39 resets the solution-not-updated period to 0.

Step S35: The solution-not-updated-state determination unit 39 determines whether or not the mode is the normal state. When it is determined that the mode is the normal state, processing of step S36 is performed. When it is determined that the mode is not the normal state, processing of step S38 is performed.

Step S36: The current solution and Emin holding/updating unit 37 stores Emin and the current solution that is the state at a time when the Emin is obtained.

Step S37: The current solution is registered as a solution candidate in the solution pool 38. The value of Emin corresponding to that current solution is also registered in the solution pool 38. Thereafter, the processing in step S40 is performed.

Step S38: The solution-not-updated-state determination unit 39 sets the mode to the normal state. For example, it is determined that the current state has escaped from the local solution.

Step S39: The inversion variable restriction unit 41 cancels the restriction on the state variable (inversion variable) for which the inversion of the value is to be permitted. Thereafter, the processing in step S40 is performed.

Step S40: The overall control unit 33 determines whether or not the search end condition is satisfied. For example, when the number of times the inversion variable is selected in step S21 has reached a predetermined number of times or when a search period of the local search has reached a predetermined period, it is determined that the search end condition is satisfied. When it is determined that the search end condition is satisfied, processing in step S41 is performed. When it is determined that the search end condition is not satisfied, the processing from step S21 is repeated.

In a case where the simulated annealing method is performed, for example, the overall control unit 33 decreases the value of the temperature parameter (T) in accordance with a predetermined temperature parameter change schedule every time the processing of step S21 is repeated a predetermined number of times.

In a case where the replica exchange method is performed, for example, the overall control unit 33 performs a replica exchange every time the processing of step S21 is repeated a predetermined number of times. For example, the overall control unit 33 selects two replicas having adjacent values of T, and exchanges the values of T or the values of each state variable between the two selected replicas at a predetermined exchange probability that is based on a difference in $E(x)$ between the replicas or a difference between the values of T.

Step S41: For example, the output unit 43 outputs, as a search result, the solution candidate and the corresponding value of the evaluation function stored in the solution pool 38. The processing then ends.

As described above, when the current state becomes the solution-not-updated state indicating a state in which the current state has fallen into the local solution, an elite solution is determined, and the value of the state variable that has a mutually equal value between the current state and the elite solution among the plurality of state variables is fixed. Then, a local search is performed in a search range that is based on the state variable that has mutually different values between the current state and the elite solution among the plurality of state variables.

This consequently creates the directivity of the state transition from the current state, to a direction in which a possibility of finding a better state (with a smaller value of $E(x)$) increases (a direction approaching the elite solution), and facilitates the escape from the local solution. Consequently, the solution finding time may be shortened.

Since the search range is limited by restricting the inversion variable, an amount of calculation for the processing for escaping from the local solution may be reduced.

When Emin is updated during the search in which the inversion variable is restricted, it is determined that the current state has escaped from the local solution, and the restriction on the inversion variable is canceled. Consequently, the local search in a wide search range is enabled again.

When it is determined that the current state has not escaped from the local solution within the predetermined period during the search in which the inversion variable is restricted (which corresponds to the case where mode == solution-not-updated state and solution-not-updated period > T2), another elite solution is determined. The value of the state variable that has a mutually equal value between the current state and that elite solution among the plurality of state variables is fixed. Then, the local search is performed in a search range that is based on the state variable that has mutually different values between the current state and that elite solution among the plurality of state variables. This increases the possibility of successfully escaping from the local solution.

(Second Processing Procedure)

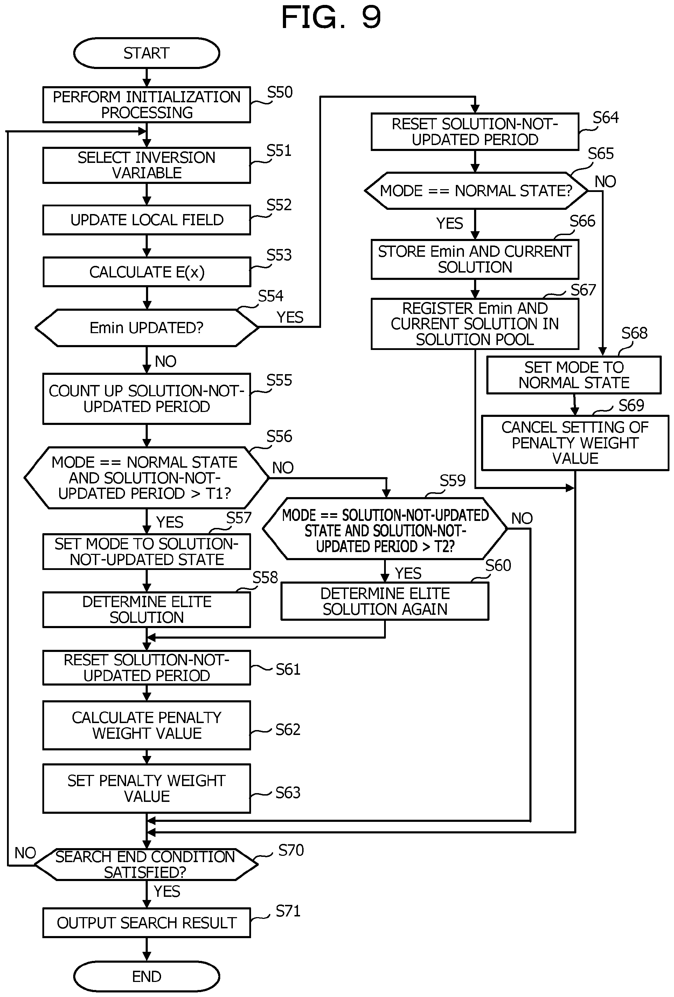

FIG. 9 is a flowchart illustrating a flow of the second processing procedure of the data processing apparatus.

Processing of steps S50 to S61 is the same as the processing of steps S20 to S31 illustrated in FIG. 8, respectively.

Step S62: The penalty weight value setting unit 42 calculates the penalty weight value described above.

Step S63: The penalty weight value setting unit 42 sets the calculated penalty weight value in the search processing unit 35. Thus, the search processing unit 35 performs the local search using the penalty weight value stored in the penalty weight value storage unit 35b. After the processing of step S63, processing of step S70 is performed.

Processing of steps S64 to S68 is the same as the processing of steps S34 to S38 illustrated in FIG. 8, respectively.

Step S69: The penalty weight value setting unit 42 cancels the setting of the penalty weight value in the search processing unit 35. Thus, the search processing unit 35 performs the local search by using the weight value stored in the weight value storage unit 35a. Thereafter, the processing in step S70 is performed.

Processing of steps S70 and S71 is the same as the processing of steps S40 and S41 illustrated in FIG. 8, respectively.

The second evaluation function using the penalty weight value may be represented by, for example, Expression (4) above, and indicates a greater tendency that the value at the elite solution decreases, than the first evaluation function represented by Expression (1). This consequently creates the directivity of the state transition from the current state, to a direction in which a possibility of finding a better state (with a smaller value of $E(x)$) increases (a direction approaching the elite solution), and facilitates the escape from the local solution.

When Emin is updated during the search (using the second evaluation function) in which the penalty weight value is set, it is determined that the current state has escaped from the local solution, and the setting of the penalty weight value is canceled. Consequently, the evaluation function used in the local search returns to the first evaluation function from the second evaluation function, and the local search using the first evaluation function is performed. Therefore, after the escape from the local solution is achieved, the local search using the original first evaluation function is enabled again.

When it is determined that the current state has not escaped from the local solution within the predetermined period during the search (using the second evaluation function) in which the penalty weight value is set (which corresponds to the case where mode == solution-not-updated state and solution-not-updated period > T2), another elite solution is determined. Then, the second evaluation function is changed to the third evaluation function obtained by adding, to the second evaluation function, the second constraint term that has a magnitude proportional to the Hamming distance between the determined elite solution and the current state. Thus, the search processing unit 35 performs the local search using the third evaluation function. This increases the possibility of successfully escaping from the local solution.

The order of the processing in FIGs. 8 and 9 described above is an example, and the order of the processing may be appropriately switched.

(Modification Example of Method of Determining Elite Solution)

The elite solution may be found based on the path relinking method by using two solution candidates randomly selected from the plurality of solution candidates stored in the solution pool 38. The path relinking method is introduced in, for example, a literature below.

Y. Yang et al., "Path relinking for unconstrained binary quadratic programming", European Journal of Operational Research, 223 (2012), pp. 584-604

FIG. 10 is a diagram schematically illustrating a method of determining an elite solution based on the path relinking method. A horizontal axis represents the state, and a vertical axis represents the value of $E(x)$.

First, two solution candidates are randomly selected from the plurality of solution candidates stored in the solution pool 38. By using the local search, new solution candidates are sequentially generated and updated to approach from one of the solution candidates to the other solution candidate. In the example in FIG. 10, new solution candidates x2 to x6 are generated to approach from a first elite solution (solution candidate x1) to a second elite solution (solution candidate x7), among the first elite solution and the second elite solution selected from the plurality of solution candidates. In the example in FIG. 10, among the solution candidates x2 to x6, the solution candidate x4 has the smallest value of $E(x)$. Thus, the solution candidate x4 is adopted as the elite solution.

As described before, the processing content described above may be implemented by causing the data processing apparatus 20 to execute a program.

The program may be recorded on a computer-readable recording medium (for example, the recording medium 26a). As the recording medium, for example, a magnetic disk, an optical disk, a magneto-optical disk, a semiconductor memory, or the like may be used. The magnetic disk includes an FD and an HDD. The optical disk includes a CD, a CD-recordable (R)/rewritable (RW), a DVD, and a DVD-R/RW. The program may be recorded on a portable-type recording medium and distributed. In such a case, the program may be copied from the portable-type recording medium to another recording medium (for example, the HDD 23) and executed.

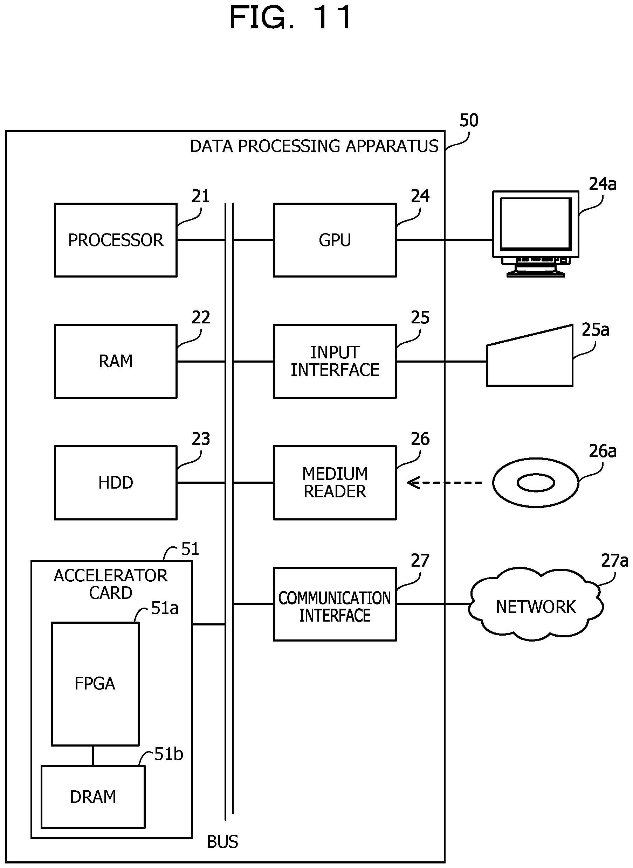

FIG. 11 is a diagram illustrating another example of the data processing apparatus. In FIG. 11, the same elements as the elements illustrated in FIG. 4 are denoted by the same reference signs.

A data processing apparatus 50 includes an accelerator card 51 coupled to the bus.

The accelerator card 51 is a hardware accelerator that searches for a solution to a combinatorial optimization problem. The accelerator card 51 includes an FPGA 51a and a dynamic random-access memory (DRAM) 51b.

With the FPGA 51a and the DRAM 51b, for example, the processing of the storage unit 11 and the processing unit 12a or 12b illustrated in FIG. 1 or 3 or the processing of each unit illustrated in FIG. 5 is performed in the data processing apparatus 50. In this case, the storage unit 11 and the processing unit 12a or 12b illustrated in FIG. 1 or 3, or each unit illustrated in FIG. 5 is implemented by various circuits built in the FPGA 51a and a memory in the FPGA 51a or the DRAM 51b.

For example, a plurality of accelerator cards 51 may be provided in accordance with the number of replicas 35r1 to 35rM in FIG. 7.

While one aspect of the program and the data processing apparatus according to the present disclosure has been described above based on the embodiments, these are merely an example, and the present disclosure is not limited to the above description.

**Claims**

1. A program comprising instructions which, when executed by a computer, cause the computer to execute processing comprising:

   searching for a solution to a combinatorial optimization problem through a local search, in a first search range that is based on a plurality of state variables;
   determining whether or not a current state represented by a combination of values of the plurality of state variables has fallen into a local solution in a search in the first search range;
   in a case where it is determined that the current state has fallen into the local solution, determining a first solution candidate, based on a plurality of solution candidates stored in a storage unit; and
   performing, in a state in which a value of a first state variable that has a mutually equal value between the current state and the first solution candidate among the plurality of state variables is fixed, the local search in a second search range that is based on a second state variable that has mutually different values between the current state and the first solution candidate among the plurality of state variables.

2. The program according to claim 1, wherein each of the plurality of solution candidates is represented by a combination of values of the plurality of state variables at a time when a minimum value among values of an evaluation function of the combinatorial optimization problem obtained during the search in the first search range is updated.

3. The program according to claim 2, wherein

   local searches, which includes the local search, are performed under a plurality of calculation conditions different from each other, and
   the plurality of solution candidates include a solution candidate obtained in each of the local searches performed under the plurality of calculation conditions.

4. The program according to claim 1, wherein the first solution candidate is a solution candidate of which a Hamming distance from the current state is closest to a threshold among the plurality of solution candidates.

5. The program according to claim 1, wherein the first solution candidate is determined based on a path relinking method by using two solution candidates randomly selected from the plurality of solution candidates.

6. The program according to claim 1, wherein the program causes the computer to execute a process comprising:
   determining that the current state has fallen into the local solution when a minimum value among values of an evaluation function of the combinatorial optimization problem obtained during the search in the first search range is not updated for a predetermined period.

7. The program according to claim 1, the processing further comprising:

   determining whether or not the current state has escaped from the local solution during a search in the second search range; and
   when it is determined that the current state has escaped from the local solution, canceling fixing of the value of the first state variable, and performing the local search in the first search range.

8. The program according to claim 7, wherein the processing further comprising:

   when it is determined that the current state has not escaped from the local solution within a predetermined period during the search in the second search range, determining a second solution candidate different from the first solution candidate, based on the plurality of solution candidates;
   fixing a value of a third state variable that has a mutually equal value between the current state and the second solution candidate among the plurality of state variables; and
   performing the local search in a third search range that is based on a fourth state variable that has mutually different values between the current state and the second solution candidate among the plurality of state variables.

9. A program comprising instructions which, when executed by a computer, cause the computer to execute processing comprising:

   searching for a solution to a combinatorial optimization problem through a local search using a first evaluation function;
   determining whether or not a current state represented by a combination of values of a plurality of state variables included in the first evaluation function has fallen into a local solution in a search using the first evaluation function;
   in a case where it is determined that the current state has fallen into the local solution, determining a first solution candidate, based on a plurality of solution candidates stored in a storage unit;
   changing the first evaluation function to a second evaluation function obtained by adding, to the first evaluation function, a first constraint term that has a magnitude proportional to a Hamming distance between the first solution candidate and the current state; and
   performing the local search by using the second evaluation function.

10. The program according to claim 9, wherein each of the plurality of solution candidates is represented by a combination of values of the plurality of state variables at a time when a minimum value among values of the first evaluation function obtained during the search using the first evaluation function is updated.

11. The program according to claim 9, wherein the processing further comprising:
    determining that the current state has fallen into the local solution when a minimum value among values of the first evaluation function obtained during the search using the first evaluation function is not updated for a predetermined period.

12. The program according to claim 9, wherein the processing further comprising:

    determining whether or not the current state has escaped from the local solution during a search using the second evaluation function; and
    when it is determined that the current state has escaped from the local solution, performing the local search using the first evaluation function.

13. The program according to claim 12, wherein the processing further comprising:

    when it is determined that the current state has not escaped from the local solution within a predetermined period during the search using the second evaluation function, determining a second solution candidate different from the first solution candidate, based on the plurality of solution candidates;
    changing the second evaluation function to a third evaluation function obtained by adding, to the second evaluation function, a second constraint term that has a magnitude proportional to a Hamming distance between the second solution candidate and the current state; and
    performing the local search by using the third evaluation function.

14. A data processing apparatus comprising:

    a storage unit configured to store a plurality of solution candidates of a combinatorial optimization problem; and
    a processing unit configured to perform:

        searching for a solution to a combinatorial optimization problem through a local search, in a first search range that is based on a plurality of state variables;
        determining whether or not a current state represented by a combination of values of the plurality of state variables has fallen into a local solution in a search in the first search range;
        in a case where it is determined that the current state has fallen into the local solution, determining a first solution candidate, based on the plurality of solution candidates; and
        performing, in a state in which a value of a first state variable that has a mutually equal value between the current state and the first solution candidate among the plurality of state variables is fixed, the local search in a second search range that is based on a second state variable that has mutually different values between the current state and the first solution candidate among the plurality of state variables.

15. A data processing apparatus comprising:

    a storage unit configured to store a plurality of solution candidates of a combinatorial optimization problem; and
    a processing unit configured to perform:

        searching for a solution to a combinatorial optimization problem through a local search using a first evaluation function;
        determining whether or not a current state represented by a combination of values of a plurality of state variables included in the first evaluation function has fallen into a local solution in a search using the first evaluation function;
        in a case where it is determined that the current state has fallen into the local solution, determining a first solution candidate, based on the plurality of solution candidates;
        changing the first evaluation function to a second evaluation function obtained by adding, to the first evaluation function, a first constraint term that has a magnitude proportional to a Hamming distance between the first solution candidate and the current state; and
        performing the local search by using the second evaluation function.

# FIG. 1

S1

LOCAL SEARCH
(FIRST SEARCH RANGE)

S2

HAS FALLEN INTO LOCAL
SOLUTION?

YES

S3

DETERMINE FIRST SOLUTION
CANDIDATE (ELITE SOLUTION)

S4

LOCAL SEARCH (SECOND SEARCH RANGE) IN STATE WHERE VALUE OF
FIRST STATE VARIABLE THAT HAS MUTUALLY EQUAL VALUE BETWEEN
CURRENT STATE AND ELITE SOLUTION IS FIXED

FIRST SEARCH RANGE

OUT OF
RANGE

SECOND SEARCH RANGE

OUT OF
RANGE

$E(x)$

15

16

STATE

10a

DATA PROCESSING
APPARATUS

12a

11

PROCESSING
UNIT

STORAGE
UNIT

# FIG. 2

# FIG. 3

S10
LOCAL SEARCH
(USING FIRST
EVALUATION FUNCTION)

⇩

S11
HAS FALLEN INTO LOCAL
SOLUTION?

YES ⇨

S12
DETERMINE FIRST SOLUTION
CANDIDATE (ELITE SOLUTION)

⇩

S13
CHANGE FIRST EVALUATION FUNCTION TO
SECOND EVALUATION FUNCTION

⇦

S14
LOCAL SEARCH (USING
SECOND EVALUATION
FUNCTION)

$E(x)$

15

17b

17a

16

18

15

STATE

DATA PROCESSING
APPARATUS 10b

12b

PROCESSING
UNIT

STORAGE
UNIT 11

# FIG. 4

**DATA PROCESSING APPARATUS** 20

| PROCESSOR 21 |
| RAM 22 |
| HDD 23 |

BUS

| GPU 24 | → 24a |
| INPUT INTERFACE 25 | → 25a |
| MEDIUM READER 26 | ← 26a |
| COMMUNICATION INTERFACE 27 | — NETWORK 27a |

# FIG. 5

DATA PROCESSING APPARATUS 20

31 STORAGE UNIT

33 OVERALL CONTROL UNIT

32 MEMORY CONTROL UNIT

34 DATA TRANSFER CONTROL UNIT

35 SEARCH PROCESSING UNIT

CURRENT STATE

36 STATE CHANGE DETECTION UNIT

$E(x)$

37 CURRENT SOLUTION AND $E_{min}$ HOLDING/ UPDATING UNIT

38 SOLUTION POOL

39 SOLUTION-NOT-UPDATED-STATE DETERMINATION UNIT

41 INVERSION VARIABLE RESTRICTION UNIT

40 ELITE SOLUTION DETERMINATION UNIT

42 PENALTY WEIGHT VALUE SETTING UNIT

43 OUTPUT UNIT

# FIG. 6

# FIG. 7

# FIG. 8

START

PERFORM INITIALIZATION PROCESSING — S20

SELECT INVERSION VARIABLE — S21

UPDATE LOCAL FIELD — S22

CALCULATE E(x) — S23

Emin UPDATED? — S24
→ YES

NO ↓

COUNT UP SOLUTION-NOT-UPDATED PERIOD — S25

MODE == NORMAL STATE AND SOLUTION-NOT-UPDATED PERIOD > T1? — S26
→ NO

YES ↓ S27

SET MODE TO SOLUTION-NOT-UPDATED STATE — S27

DETERMINE ELITE SOLUTION — S28

RESET SOLUTION-NOT-UPDATED PERIOD — S31

EXTRACT DIFFERENCE BETWEEN CURRENT STATE AND ELITE SOLUTION — S32

RESTRICT INVERSION VARIABLE — S33

RESET SOLUTION-NOT-UPDATED PERIOD — S34

MODE == NORMAL STATE? — S35
→ NO

YES ↓

STORE Emin AND CURRENT SOLUTION — S36

REGISTER Emin AND CURRENT SOLUTION IN SOLUTION POOL — S37

SET MODE TO NORMAL STATE — S38

CANCEL RESTRICTION ON INVERSION VARIABLE — S39

MODE == SOLUTION-NOT-UPDATED STATE AND SOLUTION-NOT-UPDATED PERIOD > T2? — S29
→ NO

YES ↓ S30

DETERMINE ELITE SOLUTION AGAIN — S30

SEARCH END CONDITION SATISFIED? — S40
NO ←
YES ↓

OUTPUT SEARCH RESULT — S41

END

# FIG. 9

```
            START

PERFORM INITIALIZATION              S50
PROCESSING                                      RESET SOLUTION-NOT-          S64
                                                UPDATED PERIOD
SELECT INVERSION                    S51                                            S65
VARIABLE                                                                    NO
                                                MODE == NORMAL STATE?
UPDATE LOCAL FIELD                  S52
                                                        YES             S66
CALCULATE E(x)                      S53         STORE Emin AND CURRENT
                                                SOLUTION
                              S54
                              YES               REGISTER Emin AND           S67
    Emin UPDATED?                               CURRENT SOLUTION IN
                                                SOLUTION POOL
            NO
                                                                            S68
COUNT UP SOLUTION-NOT-              S55          SET MODE TO
UPDATED PERIOD                                  NORMAL STATE
                                                                        S69
                              S56               CANCEL SETTING OF
MODE == NORMAL STATE                            PENALTY WEIGHT
AND SOLUTION-NOT-          NO                    VALUE
UPDATED PERIOD > T1?                      S59
                                       MODE == SOLUTION-NOT-UPDATED      NO
        YES          S57               STATE AND SOLUTION-NOT-
SET MODE TO SOLUTION-                  UPDATED PERIOD > T2?
NOT-UPDATED STATE                              YES            S60
                     S58               DETERMINE ELITE
DETERMINE ELITE                        SOLUTION AGAIN
SOLUTION

RESET SOLUTION-NOT-
UPDATED PERIOD              S61

CALCULATE PENALTY
WEIGHT VALUE               S62

SET PENALTY WEIGHT
VALUE                      S63

NO                                     S70
    SEARCH END CONDITION
    SATISFIED?
            YES

OUTPUT SEARCH RESULT       S71

            END
```

# FIG. 10

E(x)

x1
FIRST ELITE
SOLUTION

x2

x3

x4
ADOPTED ELITE SOLUTION

x5

SECOND ELITE
SOLUTION

x6

x7

STATE

# FIG. 11

DATA PROCESSING APPARATUS — 50

| | |
|---|---|
| PROCESSOR — 21 | GPU — 24 — 24a |
| RAM — 22 | INPUT INTERFACE — 25 — 25a |
| HDD — 23 | MEDIUM READER — 26 — 26a |

ACCELERATOR CARD — 51

FPGA — 51a

DRAM — 51b

COMMUNICATION INTERFACE — 27 — NETWORK — 27a

BUS

Europäisches
Patentamt

European
Patent Office

Office européen
des brevets

# EUROPEAN SEARCH REPORT

**Application Number**

EP 25 16 1246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CARLOSA S OLIVEIRA ET AL: "GRASP with Path-Relinking for the Quadratic Assignment Problem", 21 April 2004 (2004-04-21), EXPERIMENTAL AND EFFICIENT ALGORITHMS; [LECTURE NOTES IN COMPUTER SCIENCE;;LNCS], SPRINGER-VERLAG, BERLIN/HEIDELBERG, PAGE(S) 356 - 368, XP019006068, ISBN: 978-3-540-22067-1 * Sections 2-4 * | 1-15 | INV. G06N5/01 G06N7/01 |
| A | SONG LEI ET AL: "Solving bi-objective unconstrained binary quadratic programming problem with multi-objective path relinking algorithm", 2016 12TH INTERNATIONAL CONFERENCE ON NATURAL COMPUTATION, FUZZY SYSTEMS AND KNOWLEDGE DISCOVERY (ICNC-FSKD), IEEE, 13 August 2016 (2016-08-13), pages 289-293, XP032981985, DOI: 10.1109/FSKD.2016.7603188 [retrieved on 2016-10-19] * Section IV * | 1-15 | |
| A | JIALONG SHI ET AL: "A Parallel Tabu Search for the Unconstrained Binary Quadratic Programming problem", 2017 IEEE CONGRESS ON EVOLUTIONARY COMPUTATION (CEC), IEEE, 5 June 2017 (2017-06-05), pages 557-564, XP033114403, DOI: 10.1109/CEC.2017.7969360 [retrieved on 2017-07-05] * Section IV * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 14 August 2025 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                        

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 25 16 1246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WANG YANG ET AL:  "Path relinking for unconstrained binary quadratic programming", EUROPEAN JOURNAL OF OPERATIONAL RESEARCH, vol. 223, no. 3, 20 July 2012 (2012-07-20), pages 595-604, XP028940443, ISSN: 0377-2217, DOI: 10.1016/J.EJOR.2012.07.012 * the whole document * | 1-15 | |

TECHNICAL FIELDS
SEARCHED     (IPC)

The present search report has been drawn up for all claims

| Place of search | Date of completion of the search | Examiner |
|---|---|---|
| The Hague | 14 August 2025 | Jacobs, Jan-Pieter |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003223322 A
- JP 2018109950 A
- US 20190251227
- US 20160203419
- JP 2020064536 A

**Non-patent literature cited in the description**

- **Y. YANG et al.** Path relinking for unconstrained binary quadratic programming. *European Journal of Operational Research*, 2012, vol. 223, 584-604